(19) Europäisches Patentamt
European Patent Office
Office européen des brevets

(11) EP 2 667 555 A1

(12) EUROPEAN PATENT APPLICATION

(43) Date of publication:
27.11.2013 Bulletin 2013/48

(51) Int Cl.:
H04L 25/02 (2006.01)   H04L 25/03 (2006.01)

(21) Application number: 12168890.7

(22) Date of filing: 22.05.2012

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: ST-Ericsson SA
1228 Plan-les-Ouates (CH)

(72) Inventors:
• Xu, Baicheng
100021 Beijing (CN)
• Bachl, Rainer
90425 Nuremberg (DE)

(74) Representative: Valea AB
Anna Lindhs Plats 4
211 19 Malmö (SE)

(54) **Method and apparatus for the demodulation of a received signal**

(57) A method in a receiver for demodulating data signals transmitted over a radio channel is disclosed. The receiver receives (301) a reference signal sent from the transmitter, the transmitted reference signal is denoted by a vector **X** and the received reference signal being denoted by a vector **Y**. The receiver calculates (302), based at least on the contents of **Y**, a channel estimation matrix, **H**, comprising the true channel matrix **H** plus a channel estimation error matrix **E**, using a channel estimation algorithm. A correlation matrix $R_{EE}$ of **EX** is calculated (303) based on the channel estimation algorithm and a noise variance on the receiving antennas. Further a noise correlation matrix $R_{nn}$ is calculated (304). The receiver calculates (305) a de-correlation matrix, using the calculated channel estimation matrix, **H**, the calculated correlation matrix $R_{EE}$ of **EX** and the noise correlation matrix $R_{nn}$. A data signal sent from the transmitter to the receiver over the radio channel is received (306). Finally the received data signal is demodulated (307) by multiplying the received data signal with the calculated de-correlation matrix.

Fig. 3

**Description**

**TECHNICAL FIELD**

Embodiments herein relates generally to a communications receiver and a method therein. In particular it relates to demodulating a received signal.

**BACKGROUND**

In recent years the transmission speed in telecommunication has increased a lot. With the introduction of smartphones, tablets as well as new access technologies comes the increased demand for higher transmission speed as well as high robustness and low power consumption. This applies to all communication networks such as 3G, Long Term Evolution, LTE and Wireless Local Area Network, WLAN. The increasing transmission speed also sets new requirements and demands on the receiving node. The receiving node must be able to receive and correctly demodulate the signal sent by a transmitting node.

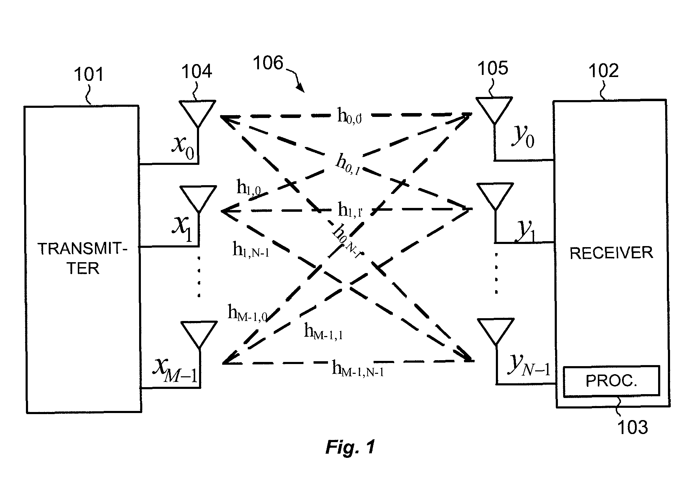

**Figure 1** illustrates a communication network. The communication network comprises a **transmitter 101.** The transmitter 101 may be any kind of device configured to transmit signals. In a cellular communications system the transmitter 101 may e.g. be a base station in a downlink traffic scenario, or a mobile terminal in an uplink traffic scenario. The transmitter 101 is able to transmit both reference signals and data signals. The purpose of the reference signal is to simplify decoding at a later stage. This will be described in more detail below. The data signals is the useful data transmitted in the communication network. The reference signals and the data signals are transmitted in a well-defined pattern in the time-frequency plane.

The scenario further comprises a **receiver 102** configured to receive the reference signals and the data signals transmitted from the transmitter 101. The receiver 102 may be any kind of device configured to receive signals. For example, in a cellular communications system the receiver 102 may be the mobile terminal in the downlink traffic scenario, or the base station in the uplink traffic scenario.

The receiver 102 comprises a **processor 103.** The processor 103 is configured to perform signal processing in the receiver 102 and calculate a channel estimation matrix based on the received known reference signals and to demodulate the received signal based on the channel estimation matrix. How this may be performed will be described below.

The transmitter 101 has a plurality of **transmitting antennas 104.** The transmitting antennas may also be called TX antennas. The plurality of transmitting antennas 104 consists of M different transmitting antennas, where M is a natural number > 0. The transmitting antennas 104 are adapted to transmit reference signal and data signals from the transmitter 101 to the receiver 102.

The receiver 102 has a plurality of **receiving antennas 105.** The receiving antennas may also be called RX antennas. The plurality of receiving antennas 105 consists of N different receiving antennas, where N is a natural number > 0. The receiving antennas 105 are adapted to receive the reference signals and data signals from the transmitter 101.

The reference signals and the data signals are sent over a **radio channel 106.** The radio channel 106 transforms the transmitted signal from the transmitting antennas 104 to the receiving antennas 105. How the signal is transformed is indicated in figure 1. In figure 1 $h_{m,n}$ indicates how the transmitted signal is transformed from transmitting antenna m to receiving antenna n.

The transmitted signal from the different transmitting antennas 104 are usually denoted as a transmitting vector $\mathbf{X} = [x_0, x_1, \cdots x_{M-1}]^T$ , where $x_i$ is the transmitted signal on the $i^{th}$ transmitting antenna 104.

The received signal on the different receiving antennas 105 are usually denoted as a receiving vector $\mathbf{Y} = [y_0, y_1, \cdots y_{N-1}]^T$ , where $y_i$ is the received signal on the $i^{th}$ receiving antenna 105.

$\mathbf{X}$ and $\mathbf{Y}$ relate to each other in the following way:

$$\mathbf{Y} = \mathbf{HX} + \mathbf{n} \qquad \text{Equation 0-1}$$

where $\mathbf{n}$ is a noise vector $\mathbf{n} = [n_0, n_1, \cdots n_{N-1}]^T$ , where $n_i$ is noise added on the $i^{th}$ receiving antenna 105.

The radio channel 106 is usually denoted as a channel matrix H with the following format:

$$\mathbf{H} = \begin{bmatrix} h_{0,0} & h_{0,1} & \cdots & h_{0,M-1} \\ h_{1,0} & h_{1,1} & \cdots & h_{1,M-1} \\ \vdots & \vdots & \ddots & \vdots \\ h_{N-1,0} & h_{N-1,1} & \cdots & h_{N-1,M-1} \end{bmatrix} \qquad \text{Equation 0-2}$$

Where, $h_{n,m}$ is a channel state of $n^{th}$ receiving to the $m^{th}$ transmitting antenna pair.

Application of Minimum Means Square Error, MMSE, is very popular in the wireless communication and signal processing field.

If the channel estimation error is ignored, the channel matrix **H** is an ideal one without any error, and the auto-correlation of transmitted signal **X** satisfies $\mathbf{R_{XX}} = \mathbf{I}$ , then MMSE solution for estimating the transmitted data **X** is:

$$\hat{\mathbf{X}} = \left(\mathbf{H}^H \mathbf{H} + \mathbf{R_{nn}}\right)^{-1} \mathbf{H}^H \mathbf{Y} \qquad \text{Equation 0-3}$$

The channel matrix **H** may never be obtained. It may only be estimated.

If $n_0, n_1, \cdots n_{n-1}$ are independent and dissociated, then Equation 0-3 may be simplified as

$$\hat{\mathbf{X}} = \left(\mathbf{H}^H \mathbf{H} + diag\left(\sigma_0^2, \sigma_1^2, \cdots \sigma_{N-1}^2\right)\right)^{-1} \mathbf{H}^H \mathbf{Y} \quad \text{Equation 0-4}$$

Where, $\sigma_i^2$ is the noise variance on $i^{th}$ transmitting antenna 104. If noise variances on all receiving antennas 105 are all equal to $\sigma^2$ , then it may be simplified further as below.

$$\hat{\mathbf{X}} = \left(\mathbf{H}^H \mathbf{H} + \sigma^2 \mathbf{I}\right)^{-1} \mathbf{H}^H \mathbf{Y} \qquad \text{Equation 0-5}$$

In current MMSE solutions, estimation error of the channel matrix is ignored and neglected in the receiver computations.

In a real system, there are always some estimated errors when **H** is obtained, if Equation 0-3 is used without any modification, it will introduce some performance loss to a certain degree.

## SUMMARY

It is therefore an object of embodiments herein to provide a way of improving the performance when demodulating data signals in a receiver.

In accordance with a first aspect of an embodiment, a method in a receiver is provided. The receiver is adapted to demodulate data signals transmitted by a transmitter over a radio channel. The transmitter has a plurality of transmitting antennas.

A reference signal sent from the transmitter to the receiver over the radio channel is received on a plurality of receiving antennas. The contents of the reference signal is known to the transmitter and to the receiver. The transmitted reference signal is denoted by a vector **X** and the received reference signal being denoted by a vector **Y.**

A channel estimation matrix, **H,** comprising the true channel matrix **H** plus a channel estimation error matrix **E,** is calculated based at least on the contents of **Y,** using a channel estimation algorithm.

A correlation matrix $\mathbf{R_{EE}}$ of **EX** is calculated based on the channel estimation algorithm and the noise variance on the receiving antennas.

A noise correlation matrix $\mathbf{R_{nn}}$ is calculated based on the noise on the receiving antennas.

A de-correlation matrix is calculated by using the calculated channel estimation matrix, **H,** the calculated correlation matrix $\mathbf{R_{EE}}$ of **EX** and the noise correlation matrix $\mathbf{R_{nn}}$.

A data signal sent from the transmitter to the receiver over the radio channel is received.

The received data signal is demodulated by multiplying the received data signal with the calculated de-correlation matrix.

In accordance with a second aspect of an embodiment, a receiver is provided. The receiver is adapted to demodulate data signals transmitted over a radio channel by a transmitter having a plurality of transmitting antennas.

The receiver comprises a receiving circuitry adapted to receive on a plurality of receiving antennas, a reference signal sent from the transmitter to the receiver over the radio channel. The contents of the reference signal is known to the transmitter and to the receiver. The transmitted reference signal is denoted by a vector **X** and the received reference signal being denoted by a vector **Y**.

The receiver further comprises a calculating circuitry adapted to calculate, based at least on the contents of **Y**, a channel estimation matrix, **H,** comprising the true channel matrix **H** plus a channel estimation error matrix **E,** using a channel estimation algorithm.

The calculating circuitry is further adapted to calculate based on the channel estimation algorithm and a noise variance on the receiving antennas, a correlation matrix $R_{EE}$ of **EX**. The calculating circuitry is further adapted to calculate a noise correlation matrix $R_{nn}$ based on the noise on the receiving antennas.

The calculating circuitry is further adapted to calculate a de-correlation matrix, using the calculated channel estimation matrix, **H,** the calculated correlation matrix $R_{EE}$ of **EX** and the noise correlation matrix $R_{nn}$.

The receiving circuitry is further adapted to receive a data signal sent from the transmitter to the receiver over the radio channel.

The receiver further comprises a demodulating circuitry adapted to demodulate the received data signal by multiplying the received data signal with the calculated de-correlation matrix.

Since the receiver compensates the channel estimation matrix $\hat{H}$ with the estimation error an improved de-correlation matrix is obtained.

An advantage with embodiments herein is that the performance of the receiver is improved.

A further advantage with embodiments herein is that a better bit error rate for the receiver is obtained.

A further advantage with embodiments herein is that a more robust MMSE solution is obtained.

## BRIEF DESCRIPTION OF THE DRAWINGS

Examples of embodiments herein are described in more detail with reference to attached drawings in which:

Figure 1 is illustrating a communication network;
Figure 2 is diagram illustrating reference symbols in the time/frequency grid for LTE.
Figure 3 is a flowchart depicting embodiments of a method in a receiver;
Figure 4 is a schematic block diagram of the receiver illustrating embodiments herein;
Figure 5 is diagram illustrating the performance of the embodiments described herein; and

## DETAILED DESCRIPTION

Embodiments will be exemplified in a non-limiting description.

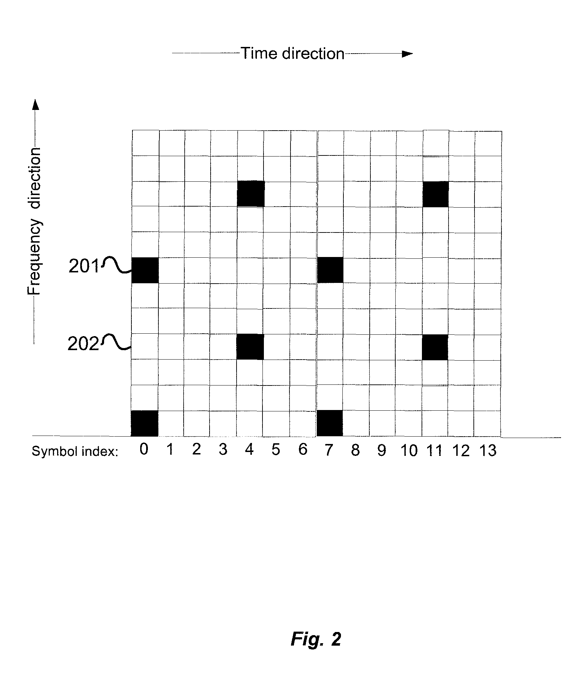

**Figure 2** illustrates how resource elements containing **reference signals 201** are included among resource elements containing **data signals 202** in a time/frequency grid for LTE. In figure 2 the reference signals 201 are illustrated with black boxes and the data signals 202 with white boxes.

For the derivation of the MMSE solution with considering estimation error, the following assumptions and operators are defined.

## Assumptions:

1. Transmitted data on different transmitting antennas 104 are independent and dissociated.

2. Additive noise and estimation error follow Gauss distribution, their mean value are both 0.

3. Additive noise, channel estimation error and transmitted data are independent and dissociated.

## Operators:

| | |
|---|---|
| $E[x]$ | Expectation of random variable $x$ |
| $\|x\|$ | Modulus of complex data $x$ |
| $x^*$ | Conjugate of complex data $x$ |
| $X^H$ | Conjugate transposed matrix of complex Matrix X |
| $diag(x_0, x_1, \cdots x_{N-1})$ | Diagonal matrix with elements $x_0, x_1, \cdots x_{N-1}$ on diagonal line |

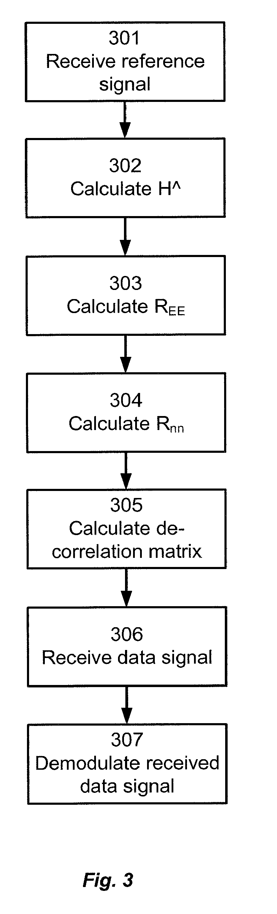

Embodiments of a **method in the receiver 102** for demodulating data signals transmitted by the transmitter 101 will now be described with reference to a flow chart depicted in **figure 3.** Figure 3 will be described from the perspective of the receiver 102. The method comprises the following actions, which actions may be carried out in another suitable order than described below. The actions may also be combined.

**Action 301**

The method comprises receiving on a plurality of receiving antennas 105, the reference signal 201 sent from the transmitter 101 to the receiver 102 over the radio channel 106. The contents of the reference signal 201 is known to the transmitter 101 and to the receiver 102. The transmitted reference signal 201 is denoted by a vector **X** and the received reference signal being denoted by a vector **Y.**

**Action 302**

A channel estimation matrix, **H,** is calculated based at least on the contents of **Y** and the known transmitted reference signal 201. The channel estimation matrix, **H,** comprises a true channel matrix **H** plus a channel estimation error matrix **E,** that is $\hat{H} = H + E$. The channel estimation matrix, **H,** is calculated using a channel estimation algorithm.

The embodiments herein may be performed using a mathematical system model. Since the mathematical system model may be denoted by **Y = HX + n** and $\hat{H} = H + E$, then the mathematical system model may be updated as below by applying the channel estimation matrix **H**

$$
\begin{aligned}
\mathbf{Y} &= (\hat{\mathbf{H}} - \mathbf{E})\mathbf{X} + \mathbf{n} \\
&= \hat{\mathbf{H}}\mathbf{X} + \mathbf{n} - \mathbf{E}\mathbf{X} \\
&\xrightarrow{\mathbf{E}' = \mathbf{E}\mathbf{X}} \\
\mathbf{Y} &= \hat{\mathbf{H}}\mathbf{X} + \mathbf{n} - \mathbf{E}' \\
&\xrightarrow{\mathbf{n}' = \mathbf{n} - \mathbf{E}'} \\
&= \hat{\mathbf{H}}\mathbf{X} + \mathbf{n}'
\end{aligned}
\qquad \text{Equation 0-6}
$$

The channel estimation error matrix E has the following format:

$$
\mathbf{E} = \begin{bmatrix}
e_{0,0} & e_{0,1} & \cdots & e_{0,M-1} \\
e_{1,0} & e_{1,1} & \cdots & e_{1,M-1} \\
\vdots & \vdots & \ddots & \vdots \\
e_{N-1,0} & e_{N-1,1} & \cdots & e_{N-1,M-1}
\end{bmatrix}
\qquad \text{Equation 0-7}
$$

Where, $e_{n,m}$ is the channel estimation error of $n^{th}$ receiving antenna 105 to the $m^{th}$ transmitting antenna 104.

The channel matrix estimation error is determined by the estimation algorithm of as well as the noise added on the received signal, which means its variance can be derived by the two items mentioned above. How to get the variance of channel estimation error is not the key point of this disclosure, it can be assumed it is a known variable.

**Action 303**

A correlation matrix $\mathbf{R_{EE}}$ of **EX,** is calculated based on the channel estimation algorithm and a noise variance on the receiving antennas 105.

The correlation matrix $\mathbf{R_{EE}}$ of $\mathbf{EX}$ is calculated by:

$$\mathbf{EX} = \begin{bmatrix} e_{0,0} & e_{0,1} & \cdots & e_{0,M-1} \\ e_{1,0} & e_{1,1} & \cdots & e_{1,M-1} \\ \vdots & \vdots & \ddots & \vdots \\ e_{N-1,0} & e_{N-1,1} & \cdots & e_{N-1,M-1} \end{bmatrix} \begin{bmatrix} x_0 \\ x_1 \\ \vdots \\ x_{N-1} \end{bmatrix}$$

$$= \begin{bmatrix} \sum_{m=0}^{M-1} x_m e_{0,m} \\ \sum_{m=0}^{M-1} x_m e_{1,m} \\ \vdots \\ \sum_{m=0}^{M-1} x_m e_{N-1,m} \end{bmatrix} = \begin{bmatrix} e'_0 \\ e'_1 \\ \vdots \\ e'_{N-1} \end{bmatrix} \qquad \text{Equation 0-8}$$

$$\mathbf{R_{EE}} = E[\mathbf{EXX}^H\mathbf{E}^H] = \begin{bmatrix} e'_0 \\ e'_1 \\ \vdots \\ e'_{N-1} \end{bmatrix}\begin{bmatrix} e'_0 \\ e'_1 \\ \vdots \\ e'_{N-1} \end{bmatrix}^H = \begin{bmatrix} e'_0 e'^*_0 & e'_0 e'^*_1 & \cdots & e'_0 e'^*_{N-1} \\ e'_1 e'^*_0 & e'_1 e'^*_1 & \cdots & e'_1 e'^*_{N-1} \\ \vdots & \vdots & \ddots & \vdots \\ e'_{N-1} e'^*_0 & e'_{N-1} e'^*_1 & \cdots & e'_{N-1} e'^*_{N-1} \end{bmatrix}$$

Equation 0-9

For the diagonal elements of $\mathbf{R_{EE}}(n,n)$:

$$\mathbf{R_{EE}}(n,n) = E[|e'_n|^2] = \left|\sum_{m=0}^{M-1} x_m e_{n,m}\right|^2$$

$$\xrightarrow{x_0,x_1\cdots x_{N-1} \text{ and } e_{n,m} \text{ are independent and dissociated}}$$

$$= \sum_{m=0}^{M-1}\left(E[|x_m|^2]E[|e_{n,m}|^2]\right) \qquad \text{Equation 0-10}$$

$$= D^2\sum_{m=0}^{M-1}\delta_{n,m}^2, n = 0,1,\cdots N-1$$

Where, $E[|x_k|^2] = D^2$, $E[|e_{n,m}|^2] = \delta_{n,m}^2$

For the non-diagonal elements $\mathbf{R_{EE}}(n,m), n \neq m$ :

$$\mathbf{R}_{EE}(n,m) = E\left[\left|e'_n e'^{*}_m\right|^2\right] = E\left[\sum_{k=0}^{M-1} x_k e_{n,k} \sum_{l=0}^{M-1} x^{*}_l e^{*}_{m,l}\right]$$

$$= E\left[\sum_{k=0}^{M-1}\sum_{l=0}^{M-1} x_k x^{*}_l e_{n,k} e^{*}_{m,l}\right]$$

$$\xrightarrow{\begin{array}{c} x_0, x_1 \cdots x_{N-1} \text{ and } e_{n,m} \text{ are independent and dissociated} \\ x_0, x_1 \cdots x_{N-1} \text{ are independent and dissociated} \end{array}} \qquad \text{Equation 0-11}$$

$$= \sum_{k=0}^{M-1}\left(E\left(\left|x_k\right|^2\right)E(e_{n,k})E(e^{*}_{m,k})\right)$$

$$\xrightarrow{\text{mean value of estimation error are } 0}$$

$$= 0$$

So,

$$\mathbf{R}_{EE} = diag(D^2\sum_{m=0}^{M-1}\delta^2_{0,m}, D^2\sum_{m=0}^{M-1}\delta^2_{1,m}, \cdots, D^2\sum_{m=0}^{M-1}\delta^2_{N-1,m}) = D^2 \cdot diag(\sum_{m=0}^{M-1}\delta^2_{0,m}, \sum_{m=0}^{M-1}\delta^2_{1,m}, \cdots, \sum_{m=0}^{M-1}\delta^2_{N-1,m})$$

Where, $\delta^2_{n,m}$ is the error variance of channel estimation from $m^{th}$ transmitting antenna 104 to $n^{th}$ receiving antenna 105.

If it is assumed that the variance of estimation error are all independent and dissociated, and all equal to $\delta^2$, then $\mathbf{R}_{EE}$ can be simplified as $\mathbf{R}_{EE} = D^2 M \delta^2 \mathbf{I}$. If the power of transmitted data $D^2 = 1$, then $\mathbf{R}_{EE}$ can be simplified further, $\mathbf{R}_{EE} = M\delta^2\mathbf{I}$, where M is the number of transmitting antennas.

**Action 304**

A noise correlation matrix $\mathbf{R}_{nn}$ is calculated based on the noise on the receiving antennas 105.

If it is assumed that the variance of noise on receiving antennas 105 are all independent and dissociated, and are all equal to $\sigma^2$, then, $\mathbf{R}_{nn}$ can be simplified as $\mathbf{R}_{nn} = \sigma^2\mathbf{I}$.

**Action 305**

A de-correlation matrix is calculated, using the calculated channel estimation matrix, **H**, the calculated correlation matrix $\mathbf{R}_{EE}$ of **EX** and the noise correlation matrix $\mathbf{R}_{nn}$.

The de-correlation matrix may be calculated as

$$\left(\hat{\mathbf{H}}^H\hat{\mathbf{H}} + \mathbf{R}_{nn} + \mathbf{R}_{EE}\right)^{-1}\hat{\mathbf{H}}^H$$

The de-correlation matrix may be calculated by $(\hat{\mathbf{H}}^H\hat{\mathbf{H}} + \mathbf{R}_{n'n'})^{-1}\hat{\mathbf{H}}^H$ wherein:

$$\mathbf{R}_{n'n'} = \mathbf{R}_{nn} + \mathbf{R}_{EE} = \mathbf{R}_{nn} + diag\left(D^2\sum_{m=0}^{M-1}\delta^2_{0,m}, D^2\sum_{m=0}^{M-1}\delta^2_{1,m}, \cdots, D^2\sum_{m=0}^{M-1}\delta^2_{N-1,m}\right)$$

$D^2$ is the power of the transmitted data signal

M is the number of transmitting antennas

N is the number of receiving antennas

$\mathbf{R_{EE}}$, is a diagonal matrix, with diagonal elements are $\left( D^2 \sum\limits_{m=0}^{M-1} \delta_{0,m}^2, D^2 \sum\limits_{m=0}^{M-1} \delta_{1,m}^2, \cdots, D^2 \sum\limits_{m=0}^{M-1} \delta_{N-1,m}^2 \right)$ respectively

H represents a Hermitian transpose

$\delta_{n,m}^2$ is the error variance of channel estimation from $m^{th}$ transmitting antenna to $n^{th}$ receiving antenna

The matrix above can be simplified as $(\hat{\mathbf{H}}^H\hat{\mathbf{H}}+(\sigma^2 + M\delta^2)\mathbf{I})^{-1}\hat{\mathbf{H}}^H$ under the assumption that the following three conditions are satisfied at the same time:

1. The variance of noise on receiving antennas 105 are all independent and dissociated, and are all equal to $\sigma^2$.

2. The variance of estimation error are all independent, and dissociated, and all equal to $\delta^2$

3. The power of transmitted data $D^2 = 1$

**Action 306**

The data signal 202 sent from the transmitter 101 over the radio channel 106 is received at the receiver 102.

**Action 307**

The received data signal **Y** is demodulated by multiplying the received data signal **Y** with the calculated de-correlation matrix.
The transmitted data signal **X** is estimated by multiplying the de-correlation matrix with the received data signal **Y**.

$$\hat{\mathbf{X}} = \left( \hat{\mathbf{H}}^H\hat{\mathbf{H}} + \mathbf{R_{nn}} + \mathbf{R_{EE}} \right)^{-1} \hat{\mathbf{H}}^H \mathbf{Y}$$

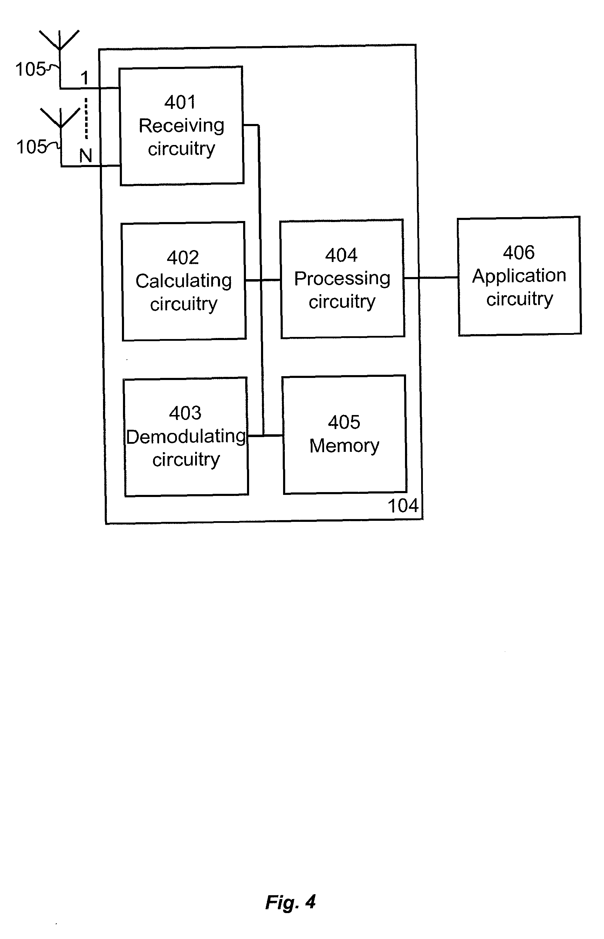

**Figure 4** illustrates the receiver 102 capable of performing the method actions described above.
The receiver 102 is adapted to demodulate data signals transmitted by the transmitter 101 having a plurality of transmitting antennas 104 over a radio channel 106.
The receiver comprises a **receiving circuitry 401** adapted to receive on the plurality of receiving antennas 105, the reference signals 201 sent from the transmitter 101 to the receiver 102 over the radio channel 106. The contents of the reference signals are known to the transmitter 101 and to the receiver 102. The transmitted reference signal 201 is denoted by a vector **X** and the received reference signal being denoted by a vector **Y.**
The receiver further comprises a **calculating circuitry 402** adapted to calculate, based at least on the contents of **Y**, the channel estimation matrix, **H,** comprising the true channel matrix **H** plus the channel estimation error matrix **E,** using the channel estimation algorithm.
The calculating circuitry 402 is further adapted to calculate a correlation matrix $\mathbf{R_{EE}}$ of **EX** based on the channel estimation algorithm and the noise variance on the receiving antennas 105.
The calculating circuitry 402 is further adapted to calculate the noise correlation matrix $\mathbf{R_{nn}}$ based on the noise on the receiving antennas 105.
The calculating circuitry 402 is further adapted to calculate the de-correlation matrix, using the calculated channel estimation matrix, **H,** the calculated correlation matrix $\mathbf{R_{EE}}$ of **EX** and the noise correlation matrix $\mathbf{R_{nn}}$,
[0076]    The receiving circuitry 401 is further adapted to receive the data signal 202 sent from the transmitter 101 to the receiver 102 over the radio channel 106.
The receiver further comprises a **demodulating circuitry 403** adapted to demodulate the received data signal by multiplying the received data signal with the calculated de-correlation matrix.
The calculating circuitry 402 is further adapted to calculate the de-correlation matrix by $(\hat{\mathbf{H}}^H\hat{\mathbf{H}} + \mathbf{R_{n'n'}})^{-1}\hat{\mathbf{H}}^H$ wherein:

$$\mathbf{R_{n'n'}} = \mathbf{R_{nn}} + \mathbf{R_{EE}} = \mathbf{R_{nn}} + diag\left( D^2 \sum_{m=0}^{M-1} \delta_{0,m}^2, D^2 \sum_{m=0}^{M-1} \delta_{1,m}^2 \cdots, D^2 \sum_{m=0}^{M-1} \delta_{N-1,m}^2 \right)$$

$D^2$ is the power of the transmitted data signal

M is the number of transmitting antennas

N is the number of receiving antennas

$\mathbf{R_{EE}}$ = diag($x_0, x_1, \cdots x_{M-1}$), is a diagonal matrix, with diagonal elements are ($x_0, x_1, \cdots x_{M-1}$) respectively

*H* represents a Hermitian transpose

$\delta^2_{n,m}$ is the error variance of channel estimation from mth transmitting antenna to nth receiving antenna

When the following conditions are satisfied:

● the noise variance on the receiving antennas 105 are all independent and dissociated, and are all equal to $\sigma^2$,

● the channel estimation error variance are all independent and dissociated, and all equal to $\delta^2$, and

● the power of transmitted data $D^2 = 1$

the de-correlation matrix may be simplified as $(\hat{\mathbf{H}}^H\hat{\mathbf{H}}+(\sigma^2 + M\delta^2)\mathbf{I})^{-1}\hat{\mathbf{H}}^H$.

The embodiments herein for demodulating data signals may be implemented through one or more processors, such as a **processing circuitry 404** in the receiver 102, together with computer program code for performing the functions and actions of the embodiments herein. The program code mentioned above may also be provided as a computer program product, for instance in the form of a data carrier carrying computer program code for performing the embodiments herein when being loaded into the receiver 102. One such carrier may be in the form of a CD ROM disc. It is however feasible with other data carriers such as a memory stick. The computer program code may furthermore be provided as pure program code on a server and downloaded to the receiver 102.

The receiver 102 may further comprise a **memory 405** comprising one or more memory units. The memory 405 is arranged to be used to store data, received data streams, received information, configurations, schedulings, and applications to perform the methods herein when being executed in the receiver 102.

The receiver 102 may further be connectable to an **application circuitry 406** not included within the receiver 102. The application circuitry may be comprised within a device controlling the receiver 102. The application circuitry may e.g. be a mobile phone, a tablet or a computer.

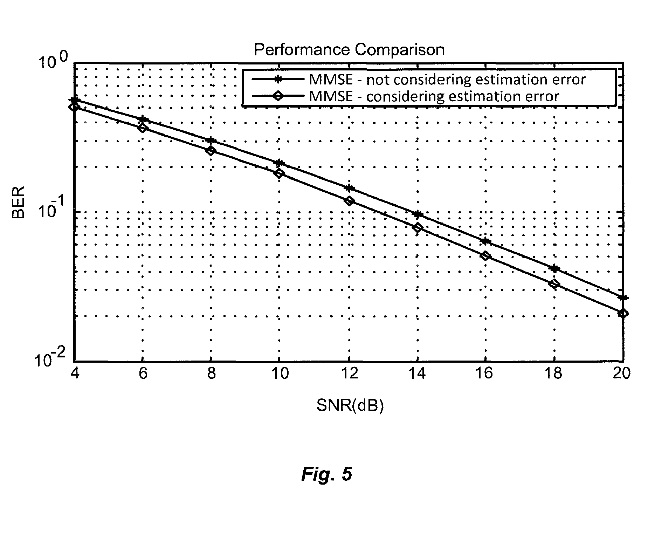

**Figure 5** is a diagram showing the benefits of the embodiments. The diagram illustrates the bit error rate BER for different signal to noise ratios SNR, when both considering the estimation error and when not considering the estimation error. As can be seen in the diagram the performance improvement is considerable.

In the simulation giving the result as in figure 5, the following conditions were assumed.

| Number of Tx antennas | Number of Rx antennas | SNR(dB) | Estimation error | Channel matrix | Modulation mode | $D^2$ |
|---|---|---|---|---|---|---|
| 4 | 4 | 4-20 | $10^{-\left(\frac{SNR+3}{10}\right)}$ | Random 4x4 matrix with distribution *N* (0,1) | QPSK | 1 |

Those skilled in the art will also appreciate that the receiving circuitry 401, the calculating circuitry 402, the demodulating circuitry 403, and the processing circuitry 404 described above may refer to a combination of analog and digital circuits, and/or one or more processors configured with software and/or firmware, e.g. stored in the memory 405, that when executed by the one or more processors. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

When using the word "comprise" or "comprising" it shall be interpreted as non-limiting, i.e. meaning "consist at least of".

The embodiments herein are not limited to the above-described preferred embodiments. Various alternatives, modifications and equivalents may be used. Therefore, the embodiments should not be taken as limiting the scope of the invention, which is defined by the appending claims.

**Claims**

1.  A method in a receiver (102) for demodulating data signals transmitted by a transmitter (101) having a plurality of transmitting antennas (104) over a radio channel (106), the method comprising:

    - receiving (301) on a plurality of receiving antennas (105), a reference signal sent from the transmitter (101) to the receiver (102) over the radio channel (106), the contents of the reference signal being known to the transmitter (101) and to the receiver (102), the transmitted reference signal being denoted by a vector **X** and the received reference signal being denoted by a vector **Y,**
    - calculating (302), based at least on the contents of **Y,** a channel estimation matrix, **H,** comprising the true channel matrix **H** plus a channel estimation error matrix **E,** using a channel estimation algorithm,
    - calculating (303) based on the channel estimation algorithm and a noise variance on the receiving antennas (105), a correlation matrix **R**$_{EE}$ of **EX,**
    - calculating (304) a noise correlation matrix **R**$_{nn}$ based on the noise on the receiving antennas (105),
    - calculating (305) a de-correlation matrix, using the calculated channel estimation matrix, **H,** the calculated correlation matrix **R**$_{EE}$ of **EX** and the noise correlation matrix **R**$_{nn}$,
    - receiving (306) a data signal sent from the transmitter (101) to the receiver (102) over the radio channel (106), and
    - demodulating (307) the received data signal by multiplying the received data signal with the calculated de-correlation matrix.

2.  The method according to claim 1, wherein the calculation of the de-correlation matrix is performed by calculating $(\hat{\mathbf{H}}^{H}\hat{\mathbf{H}} + \mathbf{R}_{n'n'})^{-1}\hat{\mathbf{H}}^{H}$
    wherein:

$$\mathbf{R}_{n'n'} = \mathbf{R}_{nn} + \mathbf{R}_{EE} = \mathbf{R}_{nn} + diag\left( D^2\sum_{m=0}^{M-1}\delta_{0,m}^2, D^2\sum_{m=0}^{M-1}\delta_{1,m}^2, \cdots, D^2\sum_{m=0}^{M-1}\delta_{N-1,m}^2 \right)$$

$D^2$ is the power of the transmitted data signal
M is the number of transmitting antennas
N is the number of receiving antennas

$\mathbf{R}_{EE}$, is a diagonal matrix, with diagonal elements are $\left( D^2\sum_{m=0}^{M-1}\delta_{0,m}^2, D^2\sum_{m=0}^{M-1}\delta_{1,m}^2, \cdots, D^2\sum_{m=0}^{M-1}\delta_{N-1,m}^2 \right)$ respectively

H represents a Hermitian transpose
$\delta^2_{n,m}$ is the error variance of channel estimation from m$^{th}$ transmitting antenna to n$^{th}$ receiving antenna

3.  The method according to claim 2, wherein:

    the noise variance on the receiving antennas (105) are all independent and dissociated, and are all equal to $\sigma^2$ ,

the channel estimation error variance are all independent and dissociated, and all equal to $\delta^2$ , and
the power of transmitted data $D^2 = 1$, whereby the de-correlation matrix becomes $(\hat{\mathbf{H}}^H\hat{\mathbf{H}} + (\sigma^2 + M\delta^2)\mathbf{I})^{-1}\hat{\mathbf{H}}^H$

4. A receiver (102) for demodulating data signals transmitted by a transmitter (101) having a plurality of transmitting antennas (104) over a radio channel (106), the receiver (102) comprising:

   - a receiving circuitry (401) adapted to receive on a plurality of receiving antennas (105), a reference signal sent from the transmitter (101) to the receiver (102) over the radio channel (106), the contents of the reference signal being known to the transmitter (101) and to the receiver (102), the transmitted reference signal being denoted by a vector **X** and the received reference signal being denoted by a vector **Y,**
   - a calculating circuitry (402) adapted to calculate, based at least on the contents of **Y**, a channel estimation matrix, **H,** comprising the true channel matrix **H** plus a channel estimation error matrix **E,** using a channel estimation algorithm,
   - the calculating circuitry (402) further being adapted to calculate based on the channel estimation algorithm and a noise variance on the receiving antennas (105), a correlation matrix $\mathbf{R}_{EE}$ of **EX,**
   - the calculating circuitry (402) further being adapted to calculate a noise correlation matrix $\mathbf{R}_{nn}$ based on the noise on the receiving antennas (105),
   - the calculating circuitry (402) further being adapted to calculate a de-correlation matrix, using the calculated channel estimation matrix, **H,** the calculated correlation matrix $\mathbf{R}_{EE}$ of **EX** and the noise correlation matrix $\mathbf{R}_{nn}$,
   - the receiving circuitry (401) further being adapted to receive a data signal sent from the transmitter (101) to the receiver (102) over the radio channel (106), and
   - a demodulating circuitry (403) adapted to demodulate the received data signal by multiplying the received data signal with the calculated de-correlation matrix.

5. The receiver (102) according to claim 4, wherein the calculating circuitry (402) is further adapted to calculate the de-correlation matrix by calculating $(\hat{\mathbf{H}}^H\hat{\mathbf{H}} + \mathbf{R}_{n'n'})^{-1}\hat{\mathbf{H}}^H$ wherein:

$$\mathbf{R}_{n'n'} = \mathbf{R}_{nn} + \mathbf{R}_{EE} = \mathbf{R}_{nn} + diag\left( D^2\sum_{m=0}^{M-1}\delta_{0,m}^2, D^2\sum_{m=0}^{M-1}\delta_{1,m}^2 \cdots, D^2\sum_{m=0}^{M-1}\delta_{N-1,m}^2 \right)$$

   $D^2$ is the power of the transmitted data signal
   M is the number of transmitting antennas
   N is the number of receiving antennas
   $\mathbf{R}_{EE}$ = diag$(x_0, x_1, \cdots x_{M-1})$, is a diagonal matrix, with diagonal elements are $(x_0, x_1, \cdots x_{M-1})$ respectively
   H represents a Hermitian transpose
   $\delta^2_{n,m}$ is the error variance of channel estimation from m$^{th}$ transmitting antenna to n$^{th}$ receiving antenna

6. The receiver (102) according to claim 5, wherein:

   the noise variance on the receiving antennas (105) are all independent and dissociated, and are all equal to $\sigma^2$ ,
   the channel estimation error variance are all independent and dissociated, and all equal to $\delta^2$ , and
   the power of transmitted data $D^2 = 1$, whereby the de-correlation matrix becomes $(\hat{\mathbf{H}}^H\hat{\mathbf{H}} + (\sigma^2 + M\delta^2)\mathbf{I})^{-1}\hat{\mathbf{H}}^H$

7. A computer program product loadable into a memory of a computerized device and comprising software code portions adapted to perform the method of any of claims 1-3.

**Fig. 1**

*Fig. 2*

301
Receive reference
signal

302
Calculate H^

303
Calculate $R_{EE}$

304
Calculate $R_{nn}$

305
Calculate de-
correlation matrix

306
Receive data signal

307
Demodulate received
data signal

**Fig. 3**

**Fig. 4**

Fig. 5

Europäisches
Patentamt

European
Patent Office

Office européen
des brevets

# EUROPEAN SEARCH REPORT

Application Number

EP 12 16 8890

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TING LI ET AL: "Turbo equalization for LTE uplink under imperfect channel estimation", IEEE 20TH INTERNATIONAL SYMPOSIUM ON PERSONAL, INDOOR AND MOBILE RADIO COMMUNICATIONS (PIMRC 2009), IEEE, PISCATAWAY, NJ, USA, 13 September 2009 (2009-09-13), pages 330-334, XP031659835, ISBN: 978-1-4244-5122-7 * Sects. 2, 3 * * figure 2 * | 1-7 | INV. H04L25/02 H04L25/03 |
| X | MARKUS A DANGL ET AL: "An improved block equalization scheme for uncertain channel estimation", IEEE TRANSACTIONS ON WIRELESS COMMUNICATIONS, IEEE SERVICE CENTER, PISCATAWAY, NJ, US, vol. 6, no. 1, 1 January 2007 (2007-01-01), pages 146-156, XP011171896, ISSN: 1536-1276, DOI: 10.1109/TWC.2007.04816 * Sect.s 2, 3, 5, 6 * | 1-7 | |
| X | M-S SADOUGH S ET AL: "Improved Iterative MIMO Signal Detection Accounting for Channel-Estimation Errors", IEEE TRANSACTIONS ON VEHICULAR TECHNOLOGY, IEEE SERVICE CENTER, PISCATAWAY, NJ, US, vol. 58, no. 7, 1 September 2009 (2009-09-01), pages 3154-3167, XP011267657, ISSN: 0018-9545, DOI: 10.1109/TVT.2009.2016103 * Sect.s 1, 2, 3, 5 * | 1-7 | TECHNICAL FIELDS SEARCHED (IPC) H04L |

-/--

The present search report has been drawn up for all claims

| Place of search | Date of completion of the search | Examiner |
|---|---|---|
| The Hague | 10 October 2012 | Colzi, Enrico |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 667 555 A1

Europäisches
Patentamt
European
Patent Office
Office européen
des brevets

# EUROPEAN SEARCH REPORT

Application Number

EP 12 16 8890

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MEHMET KEMAL OZDEMIR ET AL: "Channel estimation for wireless ofdm systems", IEEE COMMUNICATIONS SURVEYS, IEEE, NEW YORK, NY, US, vol. 9, no. 2, 1 April 2007 (2007-04-01), pages 18-48, XP011381247, ISSN: 1553-877X, DOI: 10.1109/COMST.2007.382406 * page 20 - page 24 * | 1-7 | |
| A | SHI J ET AL: "MIMO Broadcast Channels with Channel Estimation", PROCEEDINGS OF THE 2007 IEEE INTERNATIONAL CONFERENCE ON COMMUNICATIONS (ICC 2007), 24-28 JUNE 2007, GLASGOW, UK, IEEE, PISCATAWAY, NJ, USA, 1 June 2007 (2007-06-01), pages 1042-1047, XP031125810, ISBN: 978-1-4244-0353-0 * Sect.s II, III * | 1-7 | |

TECHNICAL FIELDS
SEARCHED      (IPC)

The present search report has been drawn up for all claims

| Place of search | Date of completion of the search | Examiner |
|---|---|---|
| The Hague | 10 October 2012 | Colzi, Enrico |

EPO FORM 1503 03.82 (P04C01)